# EUROPÄISCHE PATENTSCHRIFT

(11) **EP 0 628 858 B1**
(45) Veröffentlichungstag und Bekanntmachung des Hinweises auf die Patenterteilung: **06.11.2002**
(21) Anmeldenummer: 94108035.0
(22) Anmeldetag: 25.05.1994
(51) Int. Cl.: G03B 42/04, G21K 4/00

(54) **Verfahren und Vorrichtung zum Aufbelichten von Daten auf Röntgenfilme**
Method and device for imprinting data an radiographic film
Procédé et dispositif d'impression des données sur film radiographique

(30) Priorität: 07.06.1993 DE 4318899
(43) Veröffentlichungstag der Anmeldung: 14.12.1994
(73) Patentinhaber: Agfa-Gevaert AG, 51373 Leverkusen (DE)
(72) Erfinder: Widemann, Ernst, Dipl.-Ing., D-85241 Hebertshausen (DE); Schaller, Hans, D-86641 Rain/Lech (DE)

(56) Entgegenhaltungen:
- EP-A- 0 238 464
- EP-A- 0 256 535
- WO-A-90/07196
- DE-A- 4 140 718
- PATENT ABSTRACTS OF JAPAN vol. 10, no. 380 (P-528) 19. Dezember 1986 & JP-A-61 170 740 (KASEI OPTONIX) 1. August 1986
- PATENT ABSTRACTS OF JAPAN vol. 14, no. 173 (P-1033) 5. April 1990 & JP-A-02 027 496 (HITACHI MEDICAL) 30. Januar 1990
- DR. GERHARD GRAEB: "Foto-Laborhandbuch für Schwarzweiss und Farbe", 1970, WILHELM KNAPP VERLAG , DÜSSELDORF

## Beschreibung

Die Erfindung betrifft ein Verfahren und eine Vorrichtung zum punktweisen Aufbelichten von Daten auf Röntgenfilm, nach dem Oberbegriff des Anspruchs 1 bzw. des Anspruchs 7.

Röntgenfilme finden vielfach Anwendung in der zerstörungsfreien Materialprüfung sowie in der medizinischen Röntgendiagnostik. Vielfach stellt sich hierbei die Aufgabe, zusätzlich zu dem aufgenommenen Röntgenbild aufnahmespezifische Daten aufzubelichten, wie Aufnahmetag, Bedienungsperson, Filmtyp, Röhrenspannung, Objektkennzeichnung usw.. Für medizinische Anwendungszwecke werden neben den aufnahmespezifischen Daten auch Patientendaten auf dem Film benötigt, wie Name, Geburtsdatum, Krankenkasse, usw.. Die Patientendaten standen bisher auf bedruckten oder mit Schreibmaschine beschriebenen Patientenkarten zur Verfügung, die für jeden Patienten angelegt wurden und Ober einen Belichtungsvorgang auf den Film abgebildet wurden. Da die Daten häufig aber auch in einen Zentralrechner eingegeben werden, bestand der Wunsch, diese digital vorhandenen Daten direkt auf den Film aufzubelichten.

Die Patientendaten werden vielfach über ein Terminal (Tastatur, PC) in den Zentralrechner eingegeben oder in diesen Ober einen Magnetkartenleser oder einen Barcodeleser von einer Patientendatenkarte (C2-Card) eingelesen. Von dem Zentralrechner aus lassen sich die digitalisierten Daten dann in einem Patientendatensystem zentral verwalten und an beliebige andere Geräte übermitteln.

Aus der WO 89/06377 ist ein System zum Belichten von Daten auf Röntgenfilme bekannt, mit dem die Patientendaten mittels Leuchtdioden (LEDs) direkt in einem Röntgenaufnahmegerät auf den Röntgenfilm belichtet werden können. Der Röntgenfilm befindet sich dabei in einer Röntgenfilmkassette, die ein Belichtungsfenster aufweist, durch das der Röntgenfilm mit den Patientendaten beaufschlagt wird. In einer Reihe angeordnete LED's werden hierzu quer zu ihrer Anordnungsrichtung Ober das Belichtungsfenster einer Röntgenfilmkassette bewegt. Um alphanumerische Daten auf den Film aufzubelichten, werden die einzelnen LED's in zeitlicher Abfolge seriell oder parallel aktiviert. Ein Datenzeichen setzt sich dann aus mehreren, belichteten Datenpunkten zusammen.

Das aus der WO 89/06377 bekannte System ist zwar für mammografischen Film geeignet, nicht aber für alle Filmarten und Anwendungsgebiete.

Aus der WO 90/07196 ist eine Leuchtdiode bekannt, die sichtbares Licht emittiert, das eine Wellenlänge in den Bereichen 465 bis 470 nm, 455 bis 460 nm oder 424 bis 428 nm, das heißt im blauen bis violetten Bereich des sichtbaren Spektrums hat.

Der Erfindung liegt die Aufgabe zu Grunde, ein Verfahren und eine Vorrichtung zum Aufbelichten von Daten auf Röntgenfilm anzugeben, die in vielen Bereichen der Röntgentechnik anwendbar sind.

Diese Aufgabe wird gelöst durch das in Anspruch 1 beschriebene Verfahren und durch die im Anspruch 7 beschriebene Vorrichtung.

Vorteilhafte Weiterbildungen der Erfindung sind Gegenstand der Unteransprüche.

Der Erfindung liegt die Tatsache zu Grunde, dass in unterschiedlichen Anwendungsgebieten unterschiedliche Röntgenfilmsorten verwendet werden, die bei unterschiedlichen Lichtwellenlängen besonders empfindlich sind. Röntgenfilme zweier verschiedener Sorten sind weit verbreitet: einerseits sogenannter panchromatischer Film wie der Röntgenfilm Agfa Curix RPI, welcher für blaues Licht besonders empfindlich ist, andererseits sogenannter Ortho-Film wie der Film Curix Ortho HAT-U, welcher für grünes Licht besonders empfindlich ist. Es hat sich nun herausgestellt, dass sowohl grünempfindliche Ortho-Sorten als auch blauempfindliche Filme in etwa gleich stark geschwärzt werden können, wenn Leuchtdioden verwendet werden, die im Wellenlängenbereich von etwa 400 bis 510 nm Licht emittieren.

Das erfindungsgemäße Verfahren erreicht daher den Vorteil gegenüber dem aus dem Stand der Technik bekannten Verfahren, dass mit ein und denselben Leuchtdioden Röntgenfilme aus verschiedenen Anwendungsgebieten sicher und zuverlässig mit Daten belichtet werden können. Erfindungsgemäß sollen die Leuchtdioden zum Belichten eines Datenpunkts während des Ausführens der Relativbewegung derart impulsförmig angesteuert werden, dass sich die Schwärzungspunkte mehrerer Lichtimpulse auf dem Röntgenfilm teilweise überlappen.

Im Folgenden wird die Erfindung an Hand eines Ausführungsbeispiels und einigen Figuren näher erläutert. Es zeigen
- Fig. 1: eine Datenkamera,
- Fig. 2: die Datenkamera der Fig. 1 in einem anderen Betriebszustand
- Fig. 3: eine seitliche Ansicht der Datenkamera,
- Fig 4: einen Schnitt durch die Datenkamera und
- Fig. 5: einen Diodenchip der Datenkamera.

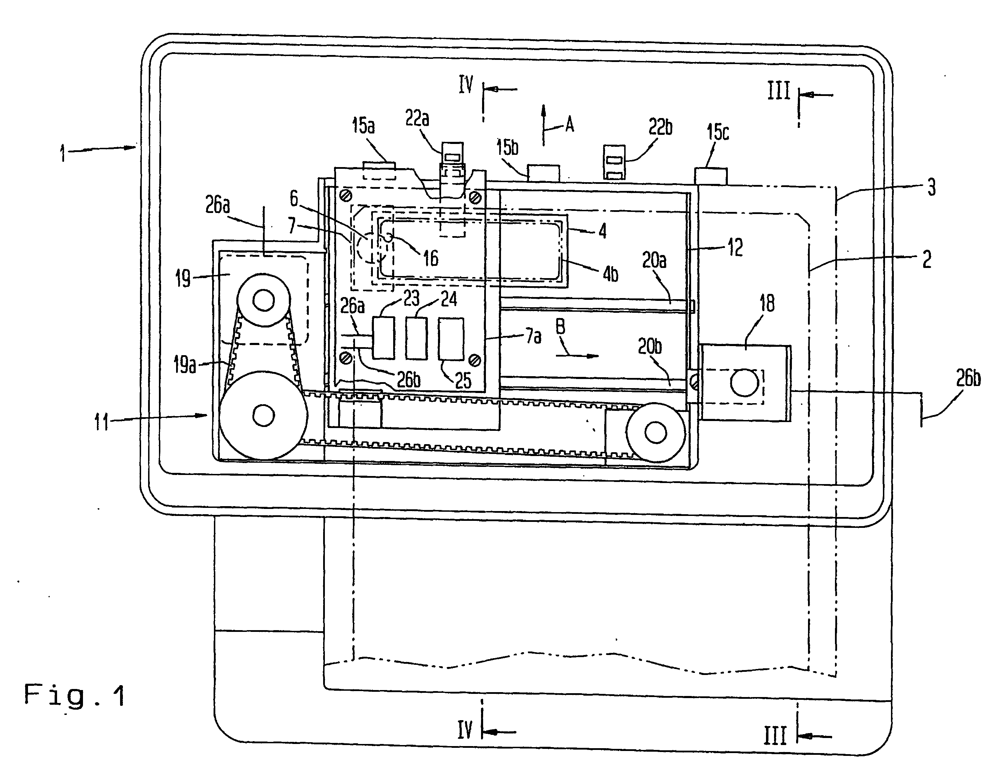

In Fig. 1 ist eine Datenkamera 1 dargestellt, in die eine Röntgenfilmkassette 3 eingelegt ist. Durch ein Belichtungsfenster 4 der Röntgenfilmkassette 3 können Daten auf einen in der Röntgenfilmkassette 3 befindlichen Röntgenfilm 2 aufbelichtet werden. Das Belichtungsfenster 4 ist mit einer lichtdichten Schiebeklappe 4b in Richtung B zu öffnen bzw. entgegengesetzt dazu zu schließen. Sensoren 15a, 15b, 15 c stellen sicher, dass die Röntgenfilmkassette 3 in einer bestimmten Lage in der Datenkamera 1 liegt, in der das Belichtungsfenster 4 im Bereich der Sensoren 15a, 15b, 15c ist. Sie geben Fehlersignale, wenn die Röntgenfilmkassette 3 in falscher Zuordnung zu der Datenkamera 1 liegt, z. B. wenn die Röntgenfilmkassette 3 derart in der Zeichenebene der Fig. 1 um 90° verdreht eingegeben wurde, daß sich das Belichtungsfenster 4 nicht im Bereich der Sensoren 15a, 15b, 15c befindet, sondern am rechten Rand der Datenkamera 1.

Mit 6 ist ein Objektiv bezeichnet, mit 7 ein Diodenchip, auf dessen Unterseite Leuchtdioden 8 in einer Richtung A angeordnet sind. Von einem öffnungsmechanismus 11 für das Belichtungsfenster 4 ist in Fig. 1 nur ein Entriegelungsstift 16, ein Motor 19, ein Riemenantrieb 19a, Führungsstangen 20a, 20b und ein Hubmagnet 18 dargestellt. Die Führungsstangen 20a, 20b sind fest mit einer Trägerplatte 12 verbunden. Der Diodenchip 7 ist auf einer Leiterplatte 7a angeordnet, auf der sich noch weitere elektronische Bauteile 23 mit einem Mikroprozessor befinden. Ferner sind auf der Leiterplatte 7a ein Zwischenspeicher 25 und eine digitale Schnittstelle 24 angeordnet, die mit den Bauteilen 23 leitend verbunden sind. Die Leiterplatte 7a ist über Stehbolzen 9 mechanisch fest verbunden mit einer Halterung 17 des öffnungsmechanismus 11. Dieser ist über den Riemenantrieb 19a von einem Motor 19 entlang der Führungsstangen 20 in Richtungen B, B' senkrecht zur Richtung A bewegbar.

Der Diodenchip 7 ist über die Leiterplatte 7a leitend mit der Elektronik 23 verbunden, die über die digitale RS232-Schnittstelle 24 Daten mit anderen Geräten oder Datenspeichern austauschen kann. Selbstverständlich wäre auch eine parallele Schnittstelle möglich. Daten, die über die Schnittstelle 24 an die Datenkamera 1 übermittelt werden, werden in dem digitalen Zwischenspeicher 25 solange gespeichert, bis die Daten vollständig auf den Röntgenfilm 2 aufbelichtet sind. Die Elektronik 23 überwacht jeweils den Datentransfer und stellt sicher, daß alle Daten korrekt übertragen werden. Außerdem steuert die Elektronik 23 über elektrische Leitungen 26a, 26b den Motor 19 und den Hubmagnet 18 an und ist mit allen Sensoren und Lichtschranken der Datenkamera 1 leitend verbunden.

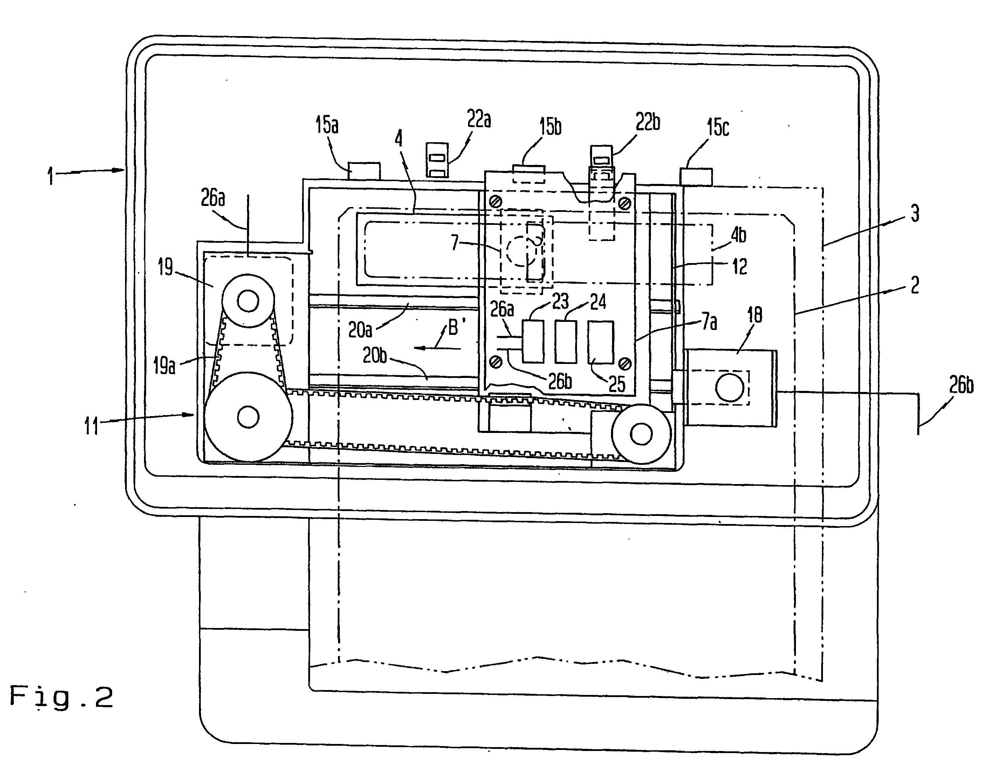

In Fig. 2 ist die Datenkamera 1 der Fig. 1 dargestellt, wobei der Öffnungsmechanismus 11 in einer Stellung dargestellt ist, in der das Belichtungsfenster 4 geöffnet ist. Die Schiebeklappe 4b ist hier nach rechts vom Fenster 4 aufgeschoben.

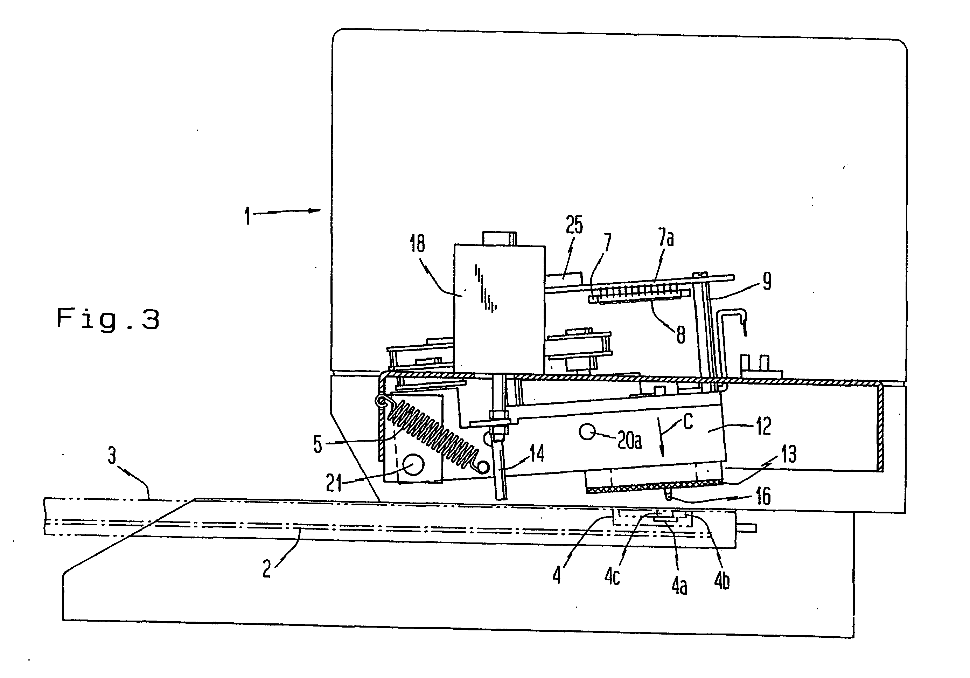

In Fig. 3 ist eine seitliche Ansicht der Datenkamera entlang der Schnittlinie III-III der Fig. 1 dargestellt. Sie zeigt, daß die Trägerplatte 12 mit einer Feder 5 an einer kamerafesten Achse 21 schwenkbar gelagert und mit einem Hubmagnet 18 entgegen der Federkraft in Richtung C absenkbar ist. Wenn keine Röntgenfilmkassette 3 in die Datenkamera 1 eingeführt ist, befindet sich die Trägerplatte 12 in der in Fig. 3 dargestellten, angehobenen Stellung. Nach korrektem Einführen einer Kassette 3 in die Kamera 1 wird von dem Hubmagneten 18 die Trägerplatte 12 in eine Stellung abgesenkt, in der das Belichtungsfenster 4 durch die Lichtabdichtung 13 rundum lichtdicht abgeschlossen ist.

Ein Anschlag 14 begrenzt die Absenkbewegung der Trägerplatte 12 auf die Oberseite der Röntgenfilmkassette 2, so daß eine feste Zuordnung der Schärfeebene des Objektivs 6 zu der Filmebene des Röntgenfilms 2 sichergestellt ist. Der Anschlag 14 ist in seiner Höhe einstellbar und damit an verschiedene Filmlagen anpaßbar.

Der Entriegelungsstift 16 greift nach dem Absenken der Trägerplatte 12 in die Entriegelungsöffnung 4c ein und drückt auf die Entriegelungswippe 4a. Dadurch läßt sich die Schiebeklappe 4b verschieben und das Belichtungsfenster 4 öffnen.

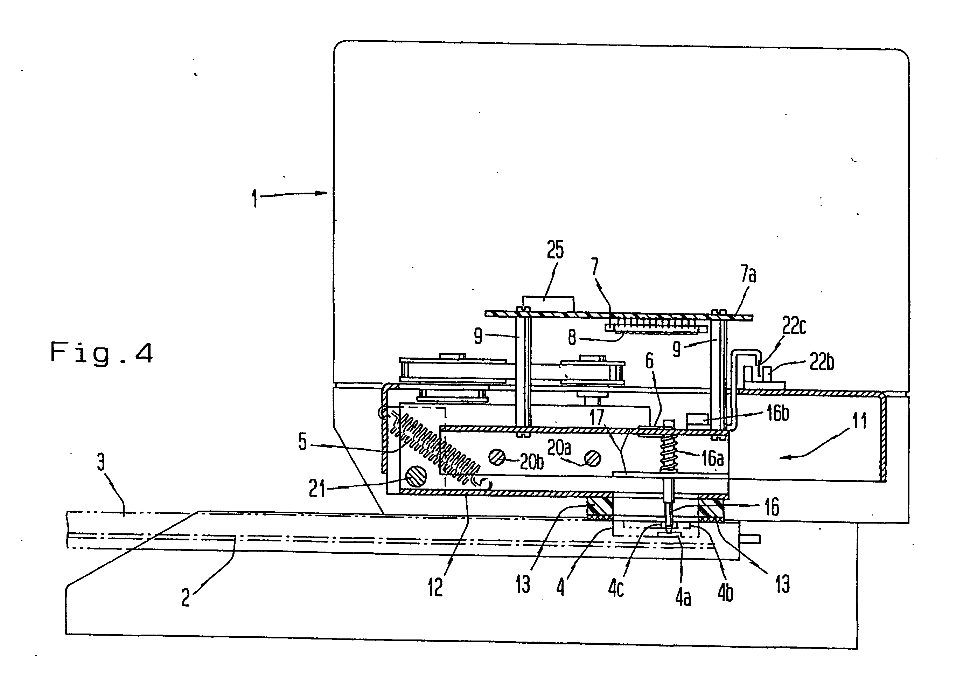

In Fig. 4 ist ein Schnitt durch die Datenkamera durch die Schnittlinie IV-IV der Fig. 1 dargestellt. Das Belichtungsfenster 4 weist eine Entriegelungswippe 4a zum Ver- und Entriegeln der Schiebeklappe 4b auf. Durch die öffnung 4c ist die Entriegelungswippe 4a von oben zugänglich. Die hier dargestellten Teile des Öffnungsmechanismus 11 bestehen aus einer Lichtabdichtung 13 für das Belichtungsfenster 4 sowie aus einem Entriegelungsstift 16, der mit einer Feder 16a an einer Halterung 17 federnd gelagert ist. Ein Sensor 16b (Lichtschranke) überwacht die Lage des Entriegelungsstifts 16. Die Halterung 17 ist entlang der Führungsstangen 20a, 20b zusammen mit der Leiterplatte 7a verschiebbar.

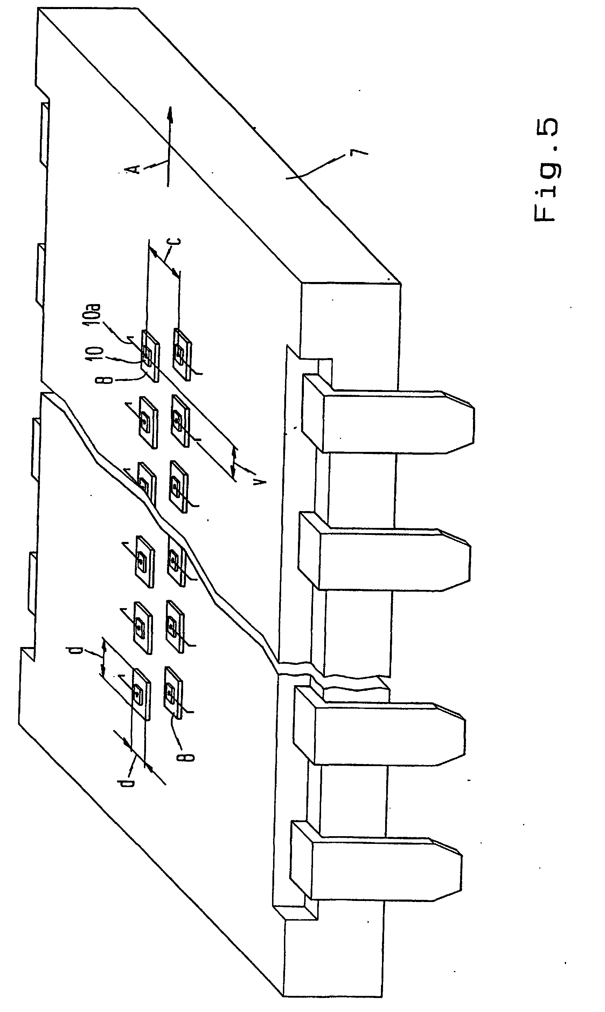

In Fig. 5 ist der Diodenchip 7 im Detail dargestellt. Der Chip ist von der Firma ELCOS GmbH, D-8068 Pfaffenhofen, hergestellt und trägt zwei gegenüberliegende, parallele Spalten mit je 40 Leuchtdioden 8 des Typs C470-5D, die jeweils in einer Spaltenrichtung A angeordnet sind. Die beiden Spalten sind in Spaltenrichtung A um einen Bruchteil v der Breite d einer Leuchtdiode zueinander versetzt angeordnet, wodurch eine hohe Auflösung beim Belichten der Datenpunkte erzielt wird. Jede der Leuchtdioden 8 trägt in ihrem Flächenzentrum einen Bond-Pad 10, an dem ein Bond-Draht 10a kontaktiert ist. Der Bond-Draht 10a stellt eine leitende Verbindung zu dem Diodenchip 7 her. Die Leuchtdioden 8 senden blaues Licht mit maximaler Emission bei einer Wellenlänge von 470 nm und mit einer spektralen Halbwertsbreite von 70 nm aus. Die Leuchtdioden 8 haben eine quadratische Emissionsfläche der Breite d = 0,33 mm, die Diodenspalten einen Abstand c von 1,2 mm. Der Versatz v der beiden Diodenspalten beträgt 0,3 mm.

Im folgenden wird der Ablauf für das Belichten von Daten auf einem Röntgenfilm 2 in der Datenkamera 1 beschrieben: Zunächst wird die Röntgenfilmkassette 3 mit dem darin befindlichen Röntgenfilm 2 in die Datenkamera 1 eingeschoben. Die Sensoren 15a, 15b, 15c erkennen die Lage der eingegebenen Kassette 3 in der Datenkamera 1. Bei korrekter Lage der Kassette 3 in der Datenkamera 1 werden die aufzubelichtenden Daten Ober die RS232-Schnittstelle 24 vollständig in den Zwischenspeicher 25 der Datenkamera 1 eingelesen.

Danach wird die Trägerplatte 12 mit dem daran befindlichen Öffnungsmechanismus 11 und Diodenchip 7 derart an die Röntgenfilmkassette 3 angepreßt, daß der Entriegelungsstift 16 mit einer vorgegebenen Kraft von etwa 8 N die Entriegelungswippe 4a des Belichtungsfensters 4 entgegen einer Federkraft der Wippe 4a um eine vorgegebene Eintauchtiefe nach unten drückt. Die Eintauchtiefe des Entriegelungsstiftes 16 in das Belichtungsfenster 4 wird mit einer Lichtschranke 16 b überwacht: Taucht der Entriegelungsstift 16 nicht tief genug ein, so gibt die Lichtschranke 16b eine Fehlermeldung "Entriegelungsstift zu hoch". Beim Absenken der Trägerplatte 12 wird außerdem die mit einem Filzbelag ausgestattete Lichtabdichtung 13 vollständig um das Belichtungsfenster 4 an die Röntgenfilmkassette 3 angepreßt. Dadurch wird das Belichtungsfenster 4 von außen lichtdicht abgeschlossen.

Anschließend wird der öffnungsmechanismus 11 vom Motor 19 Ober den Riemenantrieb 19a entlang den Führungsstangen 20a, 20b in Richtung B bewegt. der Entriegelungsstift 16, welcher die Entriegelungswippe 4a nach unten drückt, nimmt dabei die lichtdichte Schiebeklappe 4b in Bewegungsrichtung B mit. Dadurch wird das Belichtungsfenster 4 geöffnet. Der Motor 19 übt auf die Schiebeklappe 4b eine vorgegebene Öffnungskraft von 7 N aus. Das Belichtungsfenster 4 ist vollständig geöffnet, wenn die Marke 22c den Sensor 22b passiert hat. Die Lichtschranke 22 gibt dann ein Signal an die Elektronik 23 ab, "Fenster offen". (Fig. 2). Falls diese Endposition innerhalb einer gewissen Zeit nicht erreicht wird, wird von der Elektronik 23 eine Fehlermeldung erzeugt "Fenster nicht geöffnet".

Erst nachdem das Belichtungsfenster 4 vollständig geöffnet ist, beginnt der Belichtungsvorgang für die aufzubelichtenden Daten. Hierzu wird der Diodenchip 7 zusammen mit der öffnungsvorrichtung 11 entlang der Zeilenrichtung B' über das Belichtungsfenster 4 bewegt. Die Daten werden dabei punktweise aufbelichtet, wobei punktweise so zu verstehen ist, daß jedes Zeichen aus vielen Datenpunkten besteht. Jeder Datenpunkt besteht also aus einer. Fläche, die wesentlich kleiner ist als ein Zeichen. Zum Aufbelichten elnes Datenpunkts werden die Leuchtdioden 8 impulsförmig in einem Multiplex-Verfahren angesteuert. Jeder Datenpunkt ist aus mehreren, sich überlappenden Einzelbelichtungen aufgebaut. Hierdurch wird erreicht, daß ein Datenpunkt über seine gesamte Fläche geschwärzt wird, obwohl die Leuchtdioden 8 im Bereich der Bond-Pad 10 und der Bond-Drähte 10a jeweils kein Licht aussenden. Um eine einheitliche Größe jedes Datenpunkts sicherzustellen, wird der Belichtungsvorgang erst begonnen, wenn eine bestimmte Endgeschwindigkeit der Öffnungsvorrichtung 11 erreicht ist. Die Lichtmenge für einen Datenpunkt ist so groß bemessen, daß auch ein grünempfindlicher Film durch das blaue Licht der Dioden über seinen gesamten Bereich, mindestens aber zu 60 % seiner maximalen Dichte geschwärzt wird.

Eine Anpassung der Schriftgrößen für die aufzubelichtenden Daten aufgrund unterschiedlicher Größen der Belichtungsfenster 4 (Euro-/US-Norm) kann leicht durch unterschiedliche Ansteuerung der Leuchtdioden 8 erfolgen. Entsprechende Zeichensätze können leicht programmiert werden. Auch eine Invertierung der Daten ist ohne weiteres möglich.

Nach dem Belichten des Röntgenfilms 2 mit den Daten wird das Belichtungsfenster 4 wieder geschlossen. In vorteilhafter Weise erfolgt die Aufbelichtung der Daten gleichzeitig mit dem Schließvorgang des Belichtungsfensters 4. Die Schließkräfte sind dabei nicht beschränkt, um ein sicheres Aufbelichten mit gleichzeitigem Schließen des Fensters zu gewährleisten.

Der Schließvorgang des Belichtungsfensters 4 ist beendet, wenn die Marke 22c die Lichtschranke 22a passiert hat. Danach wird die Trägerplatte 12 von dem Hubmagneten 18 wieder angehoben und dadurch die Röntgenfilmkassette 3 zur Entnahme aus der Datenkamera 1 freigegeben.

Die Erfindung ist nicht beschränkt auf das oben beschriebene Ausführungsbeispiel. Es sind eine Vielzahl von Abänderungen denkbar, die vom Gegenstand der Erfindung Gebrauch machen. Beispielsweise ist das Objektiv 6 durch Lichtfasern ersetzbar, die das Licht von den Leuchtdioden 8 zu dem Röntgenfilm 2 leiten. Des weiteren ist es möglich, eine Spalte von Leuchtdioden 8 schräg zu ihrer Spaltenrichtung über den Film zu bewegen. Damit kann dieselbe Auflösung erreicht werden wie mit zwei zueinander versetzten Diodenspalten. Die zeitliche Ansteuerung der Dioden muß dann aber an die neuen Gegebenheiten angepaßt werden.

Der Diodenchip 7 mit den Leuchtdioden 8 kann auch in ein an sich bekanntes Gerät integriert werden, z. B. in ein Aufnahmesystem oder in ein Gerät, in dem Röntgenfilme verarbeitet werden, beispielsweise in einem Röntgenfilm-Kassettenbe- und -entladegerät, oder in einem Röntgenfilm-Entwicklungsgerät. Durch eine ohnehin vorhandene Bewegung des Röntgenfilms in diesen Geräten ist es dann möglich, den Diodenchip 7 gerätefest zu montieren und den sich bewegenden Film ebenfalls punkt- und zeilenweise mit Daten zu belichten. Das Öffnen und Schließen des Belichtungsfensters einer Röntgenfilmkassette ist dabei nicht nötig.

Die Daten können auch von einem auf der Röntgenfilmkassette befindlichen Halbleiterspeicher in ein Patientendatensystem bzw. von diesem Datensystem in den Halbleiterspeicher übertragen werden. Das Beschreiben des Halbleiterspeichers erfolgt vorzugsweise gleichzeitig mit der Röntgenaufnahme, weil dann die Gefahr, daß Daten verwechselt werden, gering gehalten wird. Die Daten können dann beim Weiterverarbeiten des Films leicht innerhalb eines Handling-Gerätes oder eines Entwicklungsgerätes auf den Film mit einer erfindungsgemäßen Belichtungsvorrichtung übertragen werden.

Obwohl die Erfindung nur anhand einiger weniger Ausführungsbeispiele beschrieben ist, gibt es eine Reihe weiterer, nicht im einzelnen genannter Ausführungsformen der Erfindung.

## Patentansprüche

1. Verfahren zum punktweisen Aufbelichten von Daten mittels Leuchtdioden (8) auf Röntgenfilm (2), wobei zwischen den in einer Spalte angeordneten Leuchtdioden (8) und dem Röntgenfilm (2) eine Relativbewegung quer zur Spaltenrichtung (A) ausgeführt wird und die Leuchtdioden (8) entsprechend den aufzubelichtenden Daten (5) in zeitlicher Abfolge zum Leuchten angeregt werden, **dadurch gekennzeichnet, daß** mit den Leuchtdioden (8) sowohl grünempfindlicher als auch blauempfindlicher Röntgenfilm (2) belichtet wird, die zum Aufbelichten der Daten benutzten Leuchtdioden (8) ein Licht aussenden, das ein Intensitätsmaximum im Wetlenlängenbereich zwischen 400 und 510 nm hat, und die Leuchtdioden (8) zum Belichten eines Datenpunkts während des Ausführens der Relativbewegung derart impulsförmig angesteuert werden, daß sich die Schwärzungspunkte mehrerer Lichtimpulse auf dem Röntgenfilm (2) teilweise überlappen.

2. Verfahren nach Anspruch 1, **dadurch gekennzeichnet, daß** die Leuchtdioden (8) schräg zur Spaltenrichtung über den Röntgenfilm (2) bewegt werden.

3. Verfahren nach einem der vorhergehenden Ansprüche, **dadurch gekennzeichnet, daß** die Daten digitalisiert sind.

4. Verfahren nach einem der vorhergehenden Ansprüche, **dadurch gekennzeichnet, daß** sich der Röntgenfilm (2) in einer Röntgenfilmkassette (3) befindet, die ein zu öffnendes Belichtungsfenster (4) aufweist, durch das die Daten auf den Röntgenfilm (2) belichtet werden, und das Belichtungsfenster (4) erst vollständig geöffnet und dann der Röntgenfilm (2) belichtet wird.

5. Verfahren nach Anspruch 4, **dadurch gekennzeichnet, daß** die Leuchtdioden (8) fest mit Mitteln (11) verbunden sind, die das Belichtungsfenster (4) öffnen und schließen, und daß die Belichtung des Röntgenfilms (2) gleichzeitig mit dem Schließen des Belichtungsfensters (4) durchgeführt wird.

6. Verfahren nach einem der vorhergehenden Ansprüche, **dadurch gekennzeichnet, daß** die Leuchtdioden (8) fest mit einem Röntgenfilmverarbeitungsgerät verbunden sind und daß der Röntgenfilm (2) an den Leuchtdioden (8) vorbeitransportiert wird.

7. Vorrichtung zum punktweisen Aufbelichten von Daten (5) auf grünempfindlichen Röntgenfilm (2) mit Leuchtdioden (8), die in einer Spalte angeordnet sind, wobei die Vorrichtung so ausgestaltet ist, daß zwischen den Leuchtdioden (8) und dem grünempfindlichen Röntgenfilm (2) eine Relativbewegung quer zur Spaltenrichtung (A) ausführbar ist und die Leuchtdioden (8) entsprechend den aufzubelichtenden Daten in zeitlicher Abfolge zum Leuchten anregbar sind, **dadurch gekennzeichnet, daß** das von den Leuchtdioden (8) aussendbare Licht ein Intensitätsmaximum im Wellenlängenbereich zwischen 400 und 510 nm hat und die Leuchtdioden (8) zum Belichten eines Datenpunkts während des Ausführens der Relativbewegung derart impulsförmig angesteuert werden daß sich die Schwärzungspunkte mehrerer Lichtimpulse auf dem Röntgenfilm (2) teilweise überlappen.

8. Vorrichtung nach Anspruch 7, **gekennzeichnet durch** zwei gegenüberliegende, parallele Spalten von Leuchtdioden (8), die in Spaltenrichtung (A) um einen Bruchteil (v) einer Leuchtdiodenbreite (d) zueinander versetzt angeordnet sind.

9. Vorrichtung nach einem der Ansprüche 7 oder 8, **gekennzeichnet durch** eine digitale Schnittstelle (24) zur Verbindung mit einem Dateneingabegerät, Datenspeicher oder Datenverwaltungsgerät.

10. Vorrichtung nach einem der Ansprüche 7 bis 9, **gekennzeichnet durch** einen digitalen Zwischenspeicher (25).

11. Vorrichtung nach einem der Ansprüche 7 bis 10, **dadurch gekennzeichnet, daß** die Leuchtdioden gemeinsam auf einem Chip (7) angebracht sind.

12. Vorrichtung nach einem der Ansprüche 7 bis 11, **gekennzeichnet durch** optische Mittel (6), die das emittierte Licht der Leuchtdioden (8) auf den Röntgenfilm (2) abbilden oder leiten.

13. Vorrichtung nach Anspruch 12, **dadurch gekennzeichnet, daß** die optischen Mittel ein Objektiv (6) umfassen.

14. Vorrichtung nach Anspruch 12, **dadurch gekennzeichnet, daß** die optischen Mittel Lichtleiter umfassen.

15. Vorrichtung nach einem der Ansprüche 7 bis 14, **dadurch gekennzeichnet, daß** Mittel (11) zum Öffnen und Schließen eines Belichtungsfensters (4) einer Röntgenfilmkassette (3) vorgesehen sind, und daß die Leuchtdioden (8) fest mit diesen Mitteln (11) verbunden sind.

## Claims

1. Method for point by point exposure of data on X-ray film (2) by means of light-emitting diodes (8), a relative movement being carried out transverse to the column direction (A) between the light-emitting diodes (8) arranged in a column and the X-ray film (2) and the light-emitting diodes (8) being induced to emit light in time sequence according to the data (5) to be exposed, **characterised in that** both green-sensitive and blue-sensitive X-ray film (2) is exposed by the light-emitting diodes (8), the light-emitting diodes (8) used to expose the data emit light having a maximum intensity in the wavelength range between 400 and 510 nm and the light-emitting diodes (8) are controlled pulse-wise to expose a data point while the relative movement is being carried out, in such a way that the transmission density points of a plurality of light pulses partially overlap on the X-ray film (2).

2. Method according to claim 1, **characterised in that** the light-emitting diodes (8) are moved over the X-ray film (2) obliquely to the column direction.

3. Method according to any one of the preceding claims, **characterised in that** the data are digitised.

4. Method according to any one of the preceding claims, **characterised in that** the X-ray film (2) is in an X-ray film cartridge (3) comprising an exposure window (4) by which the data on the X-ray film (2) are exposed and the exposure window (4) is first completely opened and then the X-ray film (2) exposed.

5. Method according to claim 4, **characterised in that** the light-emitting diodes (8) are rigidly connected to means (11) which open and close the exposure window (4) and **in that** the exposure of the X-ray film (2) is carried out simultaneously with closure of the exposure window (4).

6. Method according t o any one of the preceding claims, **characterised in that** the light-emitting diodes (8) are rigidly connected to an X-ray film processing apparatus and **in that** the X-ray film (2) is conveyed past the light-emitting diodes (8).

7. Device for the point by po int exposure of data (5) on green-sensitive X-ray film (2) with light-emitting diodes (8) arranged in a column, the device being designed such that a relative movement can be carried out transverse to the column direction (A) between the light-emitting diodes (8) and the green-sensitive X-ray film (2) and the light-emitting diodes (8) can be induced to emit light in time sequence according to the data to be exposed, **characterised in that** the light which can be emitted by the light-emitting diodes (8) has a maximum intensity in the wavelength range between 400 and 510 nm and the light-emitting diodes (8) are controlled pulse-wise to expose a data point while the relative movement is being carried out, in such a way that the transmission density points of a plurality of light pulses partially overlap on the X-ray film (2).

8. Device according to claim 7, **characterised by** two opposing parallel columns of light-emitting diodes (8) arranged offset from one another in column direction (A) by a fraction (v) of a light diode width (d).

9. Device according to any one of claims 7 or 8, **characterised by** a digital interface (24) for connection to a data input apparatus, data memory or data management apparatus.

10. Device according to any one of claims 7 to 9, **characterised by** a digital buffer memory (25).

11. Device according to any one of claims 7 to 10, **characterised in that** the light-emitting diodes are attached together on a chip (7).

12. Device according to any one of claims 7 to 11, **characterised by** optical mea ns (6) which display or guide the emitted light from the light-emitting diodes (8) onto the X-ray film (2).

13. Device according to claim 12, **characterised in that** the optical means comprise a lens system (6).

14. Device according to claim 12, **characterised in that** the optical means comprise optical fibres.

15. Device according to any one of claims 7 to 14, **characterised in that** means (11) for opening and closing an exposure window (4) of an X-ray film cartridge (3) are provided and **in that** the light-emitting diodes (8) are rigidly connected to these means (11).

## Revendications

1. Procédé pour l'éclairage par projection ponctuelle de données au moyen de diodes électroluminescentes (8) sur un film radiographique (2), dans lequel un déplacement relatif est effectué transversalement à la direction de la fente (A) entre les diodes électroluminescentes (8) disposées dans une fente et le film radiographique (2) et les diodes électroluminescentes (8) sont activées pour s'éclairer en succession temporelle conformément aux données à enregistrer, **caractérisé en ce que** le film radiographique (2) éclairé par les diodes électromuniscentes est sensible et/au vert et au bleu, les diodes électroluminescentes (8) utilisées pour la projection des données sortent, émettent une lumière qui a un pic d'intensité dans le domaine de longueurs d'onde situé entre 400 et 510 nm et les diodes électroluminescentes (8) pour l'illumination d'un point de données pendant l'exécution du déplacement relatif sont commandées par impulsions de telle sorte que les points de noircissement de plusieurs impulsions lumineuses se chevauchent partiellement sur le film radiographique (2).

2. Procédé selon la revendication 1, **caractérisé en ce que** les diodes électroluminescentes (8) sont déplacées transversalement à la direction de la fente sur le film radiographique (2).

3. Procédé selon l'une des revendications précédentes, **caractérisé en ce que** les données sont numérisées.

4. Procédé selon l'une des revendications précédentes, **caractérisé en ce que** le film radiographique (2) se trouve dans une cassette de film radiographique (3) qui comporte une fenêtre d'éclairage (4) destinée à être ouverte, à travers laquelle les données présentes sur le film radiographique (2) sont illuminées et la fenêtre d'éclairage (4) commence par être entièrement ouverte, puis le film radiographique (2) est éclairé.

5. Procédé selon la revendication 4, **caractérisée en ce que** les diodes électroluminescentes (8) sont solidement reliées par des moyens (11) qui ouvrent et ferment la fenêtre d'éclairage (4) et **en ce que** l'éclairage du film radiographique (2) est effectué simultanément à la fermeture de la fenêtre d'éclairage (4).

6. Procédé selon l'une quelconque des revendications précédentes, **caractérisé en ce que** les diodes électroluminescentes (8) sont reliées solidement à une unité de traitement de film radiographique et **en ce que** le film radiographique (2) est transporté devant les diodes électroluminescentes (8).

7. Dispositif pour l'éclairage par projection ponctuelle de données (5) présentes sur un film radiographique (2) sensible au vert avec des diodes électroluminescentes (8) qui sont disposées dans une fente, dans lequel le dispositif est formé de telle sorte qu'entre les diodes électroluminescentes (8) et le film radiographique (2) sensible au vert un déplacement relatif peut être effectué transversalement à la direction de la fente (A) et les diodes électroluminescentes (8) correspondant aux données à enregistrer peuvent en succession temporelle être activées pour s'éclairer, **caractérisé en ce que** la lumière qui peut être émise par les diodes électroluminescentes (8) a un pic d'intensité dans le domaine de longueurs d'onde situé entre 400 et 510 nm et **en ce que** les diodes électroluminescentes (8) pour l'éclairage d'un point de données pendant l'exécution du déplacement relatif sont commandées par impulsions de telle sorte que les points de noircissement de plusieurs impulsions lumineuses se chevauchent partiellement sur le film radiographique (2).

8. Procédé selon la revendication 7, **caractérisé par** deux fentes parallèles opposées de diodes électroluminescentes (8) qui sont disposées dans la direction d'une fente (A) pour, en une fraction de seconde (v), se rapprocher les unes des autres d'une largeur de diode électroluminescente (d).

9. Procédé selon l'une quelconque des revendications 7 ou 8, **caractérisé par** une interface numérique (24) pour la connexion avec une unité d'entrée de données, une mémoire de données ou une unité de gestion de données.

10. Procédé selon l'une quelconque des revendications 7 à 9, **caractérisé par** une mémoire tampon numérique (25).

11. Procédé selon l'une quelconque des revendications 7 à 10, **caractérisé en ce que** les diodes électroluminescentes sont intégrées ensemble sur une puce (7).

12. Procédé selon l'une quelconque des revendications 7 à 11, **caractérisé par** des moyens optiques (6) qui forment en image ou conduisent sur le film radiographique (2) la lumière émise par les diodes électroluminescentes (8).

13. Procédé selon la revendication 12, **caractérisé en ce que** les moyens optiques entourent un objectif (6).

14. Procédé selon la revendication 12, **caractérisé en ce que** les moyens optiques entourent un guide de lumière.

15. Procédé selon l'une quelconque des revendications 7 à 14, **caractérisé en ce que** des moyens (11) sont prévus pour l'ouverture et la fermeture d'une fenêtre d'éclairage (4) d'une cassette de film radiographique (3) et **en ce que** les diodes électroluminescentes (8) sont solidement reliées avec ces moyens (11).
